# EUROPÄISCHE PATENTSCHRIFT

(11) **EP 0 829 344 B1**
(45) Veröffentlichungstag und Bekanntmachung des Hinweises auf die Patenterteilung: **06.10.2004**
(21) Anmeldenummer: 97810526.0
(22) Anmeldetag: 24.07.1997
(51) Int. Cl.: B32B 27/10, B65D 85/76, B65D 81/26, B65D 65/40

(54) **Verpackungsmaterial**
Packaging material
Matériau d'emballage

(30) Priorität: 13.08.1996 CH 198796
(43) Veröffentlichungstag der Anmeldung: 18.03.1998
(73) Patentinhaber: Alcan Technology & Management AG, 8212 Neuhausen am Rheinfall (CH)
(72) Erfinder: Marbler, Claude A., 57370 Phalsbourg (FR); Parmentier, René, 57400 Buhl (FR)

(56) Entgegenhaltungen:
- EP-A- 0 229 550
- EP-A- 0 441 234
- FR-A- 2 338 197
- FR-A- 2 355 731

## Beschreibung

Die Erfindung betrifft ein Verpackungsmaterial nach dem Oberbegriff von Anspruch 1.

Es ist bekannt, dass Lebensmittel, wie z.B. Käse, während des Lagerungsprozesses reifen und dabei Gase, wie CO₂, produzieren, die entweichen sollen, die Feuchtigkeit der Umgebung muss kontrolliert sein und der Zutritt von Sauerstoff muss allenfalls begrenzt werden. Insbesondere bei Weichkäsen, die unmittelbar oder bald nach der Herstellung der Käsemasse in ihre endgültige Verpackung eingeschlagen werden, kommt dem Verpackungsmaterial eine grosse Bedeutung zu, da der Käse einerseits in der Verpackung noch reifen, anderseits bereits für die anschliessende Lagerung, den Warenumschlag und den Verkauf fertig verpackt sein muss.

Beispielsweise aus der EP-A 0 229 550 ist ein Verpackungsmaterial für z.B. Käse, Fleisch etc. bekannt. Das Verpackungsmaterial stellt eine Kombination aus einem Träger und einer wasserdurchlässigen Materie dar. Der Träger kann aus Papier oder einem mikroporösen Polymer oder einem Polymer mit Mikroperforationen sein. Die wasserdurchlässige Materie ist z.B. Polymer oder Copolymer auf Basis von Acrylnitrilen und dabei insbesondere Propfpolymere aus Amidonpolyacrylnitril und einem polyfunktionellen Alkohol.

Aus der FR-A-2 355 731 ist ein Verpackungsmaterial zum Verpacken von Weichkäse bekannt. Bei diesem Verpackungsmaterial ist eine Kunststoffhaut punktuell oder entlang von Linien gegen ein mit Paraffin beschichtetes Papier geklebt. Die Kunststoffhaut besteht aus einem Polyamidfilm, der über einen dünnen lonomerharzfilm mit einem Polyethylenfilm verbunden ist.

Solche Verpackungsmaterialien sind aufwendig in der Herstellung und können beispielsweise bezüglich der zu verwendenden Materialien, als auch der Eigenschaften, sowie einer wirtschaftlichen Erzeugung, noch weiter verbessert werden.

Aufgabe vorliegender Erfindung ist es, weiter verbesserte Materialien zur Verfügung zu stellen.

Erfindungsgemäss wird dies erreicht durch ein Verpackungsmaterial mit den Merkmalen von Anspruch 1.

Die erste funktionelle Schicht am fertigen Verpackungsmaterial ist in der Regel gegen den mit vorliegendem Verpackungsmaterial verpackten Inhalt gerichtet und die zweite funktionelle Schicht stellt die Aussenseite der Verpackung dar.

Die erste funktionelle Schicht ist ein Papier oder ein Papier mit Beschichtung .

Als Papier können beispielsweise Pack- und Hüllpapiere oder Etikettenpapiere angewendet werden. Die Oberflächen der Papiere können maschinenglatt oder einseitig glatt sein und können satiniert, gekreppt, gefärbt oder ungefärbt sein. Fallweise können die Papiere Synthesefasern enthalten. Die Papiere weisen beispielsweise eine Flächenmasse von 10 bis 100 g/m² auf, wobei eine Flächenmasse von 20 bis 50 g/m² vorteilhaft ist.

In zweckmässiger Ausführungsform weist das Papier eine Beschichtung auf und stellt ein Papier-Kunststoff-Verbundmaterial dar, welches auf wenigstens einer Seite eine Extrusionsbeschichtung, Dispersionsbeschichtung, Paraffinbeschichtung, Hotmeltbeschichtung oder eine Lackschicht trägt. Zur Verbesserung der Verbundfestigkeit zwischen Papier und Kunststoff kann fallweise eine Corona-Entladung, eine Flammenbehandlung, eine Plasmabehandlung oder eine Ozonbehandlung an der Papierbahn vorgenommen werden. Die Extrusionsschicht kann eine Flächenmasse von z.B. 1 bis 20 g/m² aufweisen. Die Beschichtung ist insbesondere unmittelbar direkt auf das Papier aufgebracht.

Die Extrusionsbeschichtung kann beispielsweise aus einem Polyolefin, wie einem Polyethylen z.B. einer Dichte von 0,92 bis 0,96, insbesondere 0,92, oder einem Polypropylen, einem Polyvinylchlorid, einem Ethylen-Copolymeren, einem Polyamid oder einem Polyester sein. Die Dicke der Schicht kann z.B. 10 bis 100 µm betragen.

Die Paraffin- oder Hotmelt-Beschichtung kann beispielsweise Paraffine, Paraffin-Kunststoff gemische, wie Paraffine mit Ethylen-Vinylacetat-Copolymeren, ferner Balsam-Harze, Kolophonoiumderivate, Kohlenwasserstoffharze, Wachse, Siegellacke, Siegellacke auf Basis von Polyvinylchlorid, Polyolefinen oder Polyacrylestern, niedermolekulare Polyethylene, ataktische Polypropylene, Ethylen-Acrylester-Copolymere oder carboxylgruppenhaltige Copolymere oder Gemische, wie Gemische von Paraffinen und Wachsen enthalten. Die Paraffin- oder Hotmelt-Beschichtung kann z.B. eine Flächenmasse von 1 bis 20 g/m2 aufweisen.

Die Lackschicht kann beispielsweise eine Siegellackschicht auf Basis von Polyvinylchlorid, Polyvinylidenchlorid, Polyvinylacetat oder Polyacrylsäureestern, die aus Wasser oder Lösungsmitteln aufgetragen werden oder es kann sich um lösungsmittelfreie Lacke handeln, wie z.B. flüssige Gemische von Monomeren und Oligomeren, die während des Trocknens Polymerisierens oder Vernetzen.

Fallweise kann auch eine Kaschierung durch Vereinigung der Papierbahn mit einer vorgefertigten Kunststoff-Folie angewendet werden.

Die Beschichtung kann Siegeleigenschaften aufweisen und zum teilweise oder völlig dichten Verschliessen einer Verpackung kann mittels der Beschichtung das Verpackungsmaterial gesiegelt werden.

Der ersten funktionellen Schicht kommt die Aufgabe zu, beispielsweise bei der Verwendung des erfindungsgemässen Verpackungsmaterials zum Verpacken von Weichkäsesorten, eine genügende mechanische Festigkeit auszubilden, um die Struktur und Form des Inhaltes, z.B. des Käses zu halten. Dem Papier kommt weiter die Aufgabe zu, Feuchtigkeit aufzunehmen, zu speichern und abzugeben und temperaturausgleichend zu wirken.

Auf dem Papier ist wenigstens auf einer Seite und vorteilhaft auf nur einer Seite eine Beschichtung angebracht. Die Beschichtung liegt insbesondere auf der zum Inhalt der Verpakkung weisenden Seite des Verpackungsmaterials. Der Beschichtung kommt die Aufgabe zu, beispielsweise bei der Verwendung des Verpackungsmaterials für das Einhüllen von Käse, zu helfen, die Schimmelstruktur des Käses auszubilden und während der Lagerzeit zu halten. Damit kann vermieden werden, dass die äusserliche Schimmelschicht unansehnlich glänzend und glatt wird.

Die zweite funktionelle Schicht ist ein Polyamid oder ein Polyamid und ein Ionomerharz oder ein Polyamid und ein Ethylen/Vinylalkohol-Copolymer.

Bevorzugt liegen das Polyamid und das Ionomerharz oder das Polyamid und das Ethylen/Vinylalkohol-Copolymer als Coextrudat vor.

Die Polyamide können z.B. aus der Reihe des PA6, PA66, PA610, PA612, PA11 oder PA 12 ausgewählt werden. Ionomerharze sind amorphe Thermoplaste, wie z.B Ethylen/Acrylsäure/Natriumacrylat-Copolymere resp. sind beispielsweise Copolymerisate aus ca. 89% Ethylen und ca. 11% Acrylsäure, die Hälfte davon als Natrium- oder Zinksalz. Besonders bevorzugte Ionomerharze sind unter dem Markenname "Surlyn" der Firma Du Pont bekannt.

Die zweite funktionelle Schicht kann z.B. in Flächenmassen von 5 bis 50 g/m², bevorzugt von 10 bis 30 g/m² angewendet werden.

Die zweite funktionelle Schicht kann beispielsweise auf die erste funktionelle Schicht aus der Extruderdüse aufgebracht werden. Die zweite funktionelle Schicht kann beispielsweise auch ein Laminat aus einer Polyamid- und einer Ionomerharzfolie oder einer Polyamid- und einer Ethylen/Vinylalkohol-Copolymer-Folie sein. Insbesondere kann die zweite funktionelle Schicht auf die freie Seite des Papiers aufgebracht werden. Als freie Seite des Papiers wird die Seite bezeichnet, die nicht mit der Beschichtung versehen ist.

Zur Verbesserung der Haftung von erster und zweiter funktionellen Schicht kann eine Korona-, Flammen-, Plasma- oder Ozonbehandlung, zweckmässig am Papier, vorgenommen werden. Entsprechend dem Verfahren des Zusammenfügens der ersten und zweiten funktionellen Schicht können auch Haftvermittler oder Kaschierkleber eingesetzt werden.

Die erste funktionelle Schicht kann einen Druck und/oder Konterdruck, wie Produkteinformationen, Abbildungen, Texte usw., aufweisen und kann insbesondere auf der Seite, die der zweiten funktionellen Schicht zugewandt ist, einen Druck oder Konterdruck aufweisen. Der Druck kann auch als Druck und/oder Konterdruck an der zweiten funktionellen Schicht angebracht sein. Als Möglichkeit kann ein Druck auf der nach aussen gerichteten Seite der zweiten funktionellen Schicht angebracht sein. Bei den Drucken kann es sich z.B. um Hoch-, Tief-, Offset- oder Flexodruck handeln. Aussenliegende Drucke können durch Schutzlack abgedeckt sein. Die Drucke oder Konterdrucke können voll- oder teilflächig aufgebracht sein.

Die zweite funktionelle Schicht kann opak, durchscheinend oder transparent und ungefärbt oder gefärbt sein.

Die Werkstoffe der zweiten funktionellen Schicht weisen zweckmässig die Eigenschaft auf, entsprechend ihrem Feuchtigkeitsgehalt die Durchlässigkeit für Gase und Wasserdampf zu ändern und insbesondere bei zunehmender Feuchtigkeit die Durchlässigkeit für Gase und Wasserdampf zu erhöhen.

Mit der zweiten funktionellen Schicht wird der Gasaustausch zwischen dem Inhalt einer Verpackung aus vorliegendem Verpackungsmaterial und der Umgebungsatmosphäre gesteuert. Ist der Inhalt einer Verpackung ein Weichkäse, so bildet dieser Käse während der Reifung CO₂ und NH₃, während O₂ in bestimmtem Masse in den Käse gelangen soll.

Somit gelingt es mit vorliegendem Verpackungsmaterial einen gesteuerten Feuchtigkeits- und Gasaustausch zu erreichen und damit beispielsweise die optimale Reifung von Weichkäse zu erzielen.

In der Praxis wird ein Verpackungsmaterial bevorzugt, das, beginnend auf der zum Verpackungsinhalt zeigenden Seite, nacheinander die Schichten aufweist:
a) eine erste funktionelle Schicht aus
   a1) einer Extrusionsbeschichtung, Dispersionsbeschichtung, Paraffinbeschichtung, Hotmeltbeschichtung oder eine Lackschicht,
   a2) ein Papier
b) eine zweite funktionelle Schicht aus
   b1) einem Ionomerharz oder einem Ethylen-Vinylalkohol-Copolymer und
   b2) einem Polyamid,
wobei die Schicht b2) an der Verpackung zur Aussenseite zeigt.

Vorliegende Erfindung betrifft auch die Verwendung des vorliegenden Verpackungsmaterials zum Einschlagen von Weichkäse für den Reifungsprozess.

Der Weichkäse wird insbesondere unmittelbar oder kurz nach der Herstellung in das Verpakkungsmaterial eingeschlagen und reift, eingeschlagen im Verpackungsmaterial. Der Weichkäse kann bis zum Verzehr durch den Endverbraucher im Verpackungsmaterial belassen werden.

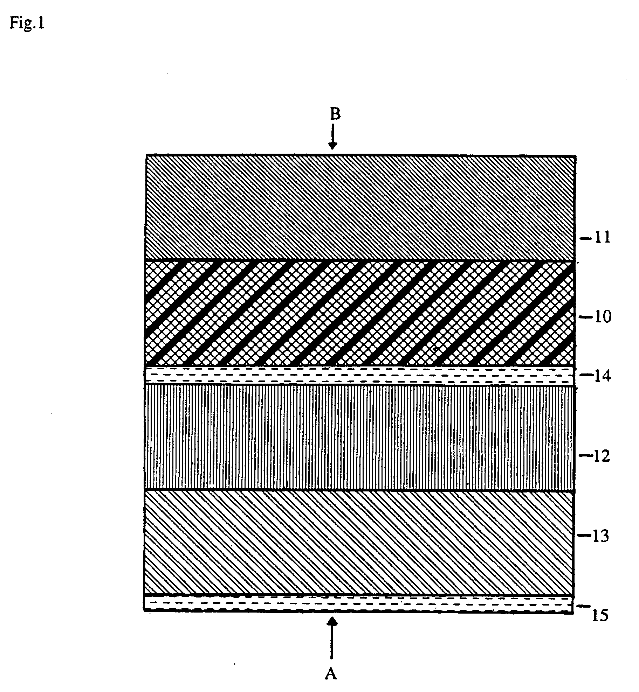

Die Figur 1 zeigt eine Schnitt durch ein Verpackungsmaterial nach vorliegender Erfindung. Die erste funktionelle Schicht 10,11 setzt sich zusammen aus dem Papier 10 mit einer Flächenmasse von beispielsweise 10 bis 100 g pro m² und einer Beschichtung 11, die eine Extrusionsbeschichtung, Dispersionsbeschichtung, Paraffinbeschichtung, Hotmeltbeschichtung oder eine Lackschicht sein kann, jeweils mit einer Flächenmasse von beispielsweise 1 bis 20 g pro m². Die zweite funktionelle Schicht 12, 13 setzt sich zusammen aus einer Ionomerharzoder Ethylenvinylalkohol-Copolymerschicht 12 und einer Polyamidschicht 13. Die beiden Schichten können beispielsweise durch Coextrusion direkt auf die noch freie Seite des Papiers 10 aufgebracht werden. Es ist auch möglich, z.B. aus einer Ionomerharz- oder einer Ethylenvinylalkohol-Copolymerfolie 12 und einer Polyamidfolie 13 eine zweite funktionelle Schicht 12,13 herzustellen. Die Ionomerharz- oder Ethylenvinylalkohol-Copolymerfolie 12, und/oder gegebenenfalls die Polyamidfolie 13, kann beispielsweise bedruckt und/oder konterbedruckt werden. Der Druck und/oder der Konterdruck ist dann auf der Aussenseite A einer Verpackung sichtbar. Anstelle des Konterdruckes 14 oder zusammen mit dem Konterdruck 14 kann ein Druck 15 auf der nach aussen weisenden Seite A des Verpackungsmaterials angebracht sein. Die Beschichtung 11 liegt auf der nach innen gerichteten Seite B des Verpackungsmaterials, d.h. die Seite B weist zum verpackten Inhalt. Die nach innen gerichtete Seite B liegt dem zu verpackenden Material direkt an und ermöglicht beispielsweise an einem Weichkäse das gewünschte Schimmelwachstum. Die Beschichtung 11 kann siegelbar sein und durch Druck und/oder Wärme kann das Verpackungsmaterial an den Überlappungen oder gefalteten Stellen durch Siegelung verschlossen werden.

## Patentansprüche

1. Verpackungsmaterial für Verpackungen von feuchtigkeitssensiblen Produkten, enthaltend wenigstens zwei funktionelle Schichten,
**dadurch gekennzeichnet, dass**
eine Feuchtigkeit aufnehmende, speichernde und abgebende und dem Verpackungsmaterial mechanische Festigkeit verleihende erste funktionelle Schicht aus einem optional eine Beschichtung (11) aufweisenden Papier (10) trennfest mit einer der ersten funktionellen Schicht anliegenden und eine in Abhängigkeit von der Feuchtigkeit sich verändernde Gasdurchlässigkeit aufweisenden zweiten funktionellen Schicht aus einem Polyamid (13), einem Polyamid (13) und einem lonomerharz (12) oder einem Polyamid (13) und einem Ethylen/Vinylalkohol-Copolymer (12) verbunden ist.

2. Verpackungsmaterial nach Anspruch 1, **dadurch gekennzeichnet, dass** das Papier (10) eine Beschichtung (11) aufweist und ein Papier-Kunststoff-Verbundmaterial ist, welches auf wenigstens einer Seite eine Extrusionsbeschichtung, Dispersionsbeschichtung, Paraffinbeschichtung, Hotmeltbeschichtung, Kaschierung oder eine Lackschicht trägt.

3. Verpackungsmaterial nach Anspruch 2, **dadurch gekennzeichnet, dass** der Kunststoff im Papier-Kunststoff-Verbundmaterial ein Polyolefin, vorzugsweise ein Polyethylen oder Polypropylen, ein Ethylen-Copolymer, ein Polyamid, ein Polyester, ein Polyvinylchlorid, ein Polyvinylacetat, ein Polyacrylsäureester, Paraffin, Paraffin-Kunststoffgemische, vorzugsweise aus Paraffin und Ethylen-Vinylacetat-Copolymeren, Kolophoniumderivate, Kohlenwasserstoffharze, Wachse oder Siegellacke, vorzugsweise Siegellacke auf Basis von Polyvinylchlorid, Polyolefinen oder Polyacrylestern enthält.

4. Verpackungsmaterial nach Anspruch 1, **dadurch gekennzeichnet, dass** das Polyamid (13) und das lonomerharz (12) oder das Polyamid (13) und das EthylenNinylalkohol-Copolymer (12) ein Coextrudat sind.

5. Verpackungsmaterial nach Anspruch 1, **dadurch gekennzeichnet, dass** das Verpackungsmaterial an der ersten funktionellen Schicht (10, 11) einen Druck und/oder Konterdruck und insbesondere auf der der zweiten funktionellen Schicht (12, 13) zugewandten Seite der ersten funktionellen Schicht einen Druck oder Konterdruck und/oder an der zweiten funktionellen Schicht (12, 13) einen Druck (15) und/oder einen Konterdruck (14) aufweist.

6. Verpackungsmaterial nach Anspruch 1, **dadurch gekennzeichnet, dass** das Verpackungsmaterial, ausgehend von einer als Innenseite einer Verpackung vorgesehenen Seite, nacheinander aufweist:
a. als erste funktionelle Schicht (10, 11)
- eine Extrusionsbeschichtung, Dispersionsbeschichtung, Paraffinbeschichtung, Hotmeltbeschichtung oder eine Lackschicht (11)
- ein Papier (10)
b. als zweite funktionelle Schicht (12, 13)
- ein lonomerharz (12) oder ein Ethylen-Vinylalkohol-Copolymeren (12)
- ein Polyamid (13).

7. Verwendung des Verpackungsmaterials nach Anspruch 1 zum Einschlagen von Weichkäse für den Reifungsprozess.

## Claims

1. Packaging material for packages for moisture-sensitive products, containing at least two functional layers, **characterised in that** a first functional layer consisting of a paper (10) optionally having a coating (11) absorbing, retaining and releasing moisture and giving the packaging material mechanical strength is inseparably joined to a second functional layer consisting of a polyamide (13), a polyamide (13) and an ionomer resin (12) or a polyamide (13) and an ethylene-vinyl alcohol copolymer (12) bearing against the first functional layer and displaying gas permeability varying as a function of the moisture.

2. Packaging material according to claim 1, **characterised in that** the paper (10) has a coating (11) and is a paper/plastic composite material provided on at least one side with an extrusion coating, a dispersion coating, a paraffin coating, a hot-melt coating, lamination or a lacquer layer.

3. Packaging material according to claim 2, **characterised in that** the plastic in the paper/plastic composite material contains a polyolefin, preferably a polyethylene or polypropylene, an ethylene copolymer, a polyamide, a polyester, a polyvinyl chloride, a polyvinyl acetate, a polyacrylate, paraffin, paraffin/plastic mixtures, preferably consisting of paraffin and ethylene-vinyl acetate copolymers, colophony derivatives, hydrocarbon resins, waxes or sealing lacquers, preferably sealing lacquers based on polyvinyl chloride, polyolefins or polyacrylates.

4. Packaging material according to claim 1, **characterised in that** the polyamide (13) and the ionomer resin (12) or the polyamide (13) and the ethylene-vinyl alcohol copolymer (12) are in the form of a coextrudate.

5. Packaging material according to claim 1, **characterised in that** the packaging material is provided on the first functional layer (10, 11) with printing and/or reverse printing and, in particular, on the side of the first functional layer directed towards the second functional layer (12, 13) with printing or reverse printing and/or on the second functional layer (12, 13) with printing (15) and/or reverse printing (14).

6. Packaging material according to claim 1, **characterised in that** the packaging material has the following sequence of layers, departing from a side intended to be the inner surface of a package:
a. as the first functional layer (10, 11)
- an extrusion coating, a dispersion coating, a paraffin coating, a hot-melt coating or a lacquer layer (11)
- a paper (10)
b. as the second functional layer (12, 13)
- an ionomer resin (12) or an ethylene-vinyl alcohol copolymer (12)
- a polyamide (13).

7. Use of the packaging material according to claim 1 to wrap soft cheese for the maturing process.

## Revendications

1. Matériau d'emballage pour emballages de produits sensibles à l'humidité, contenant au moins deux couches fonctionnelles,
**caractérisé en ce**
**qu'**une première couche fonctionnelle absorbant, conservant et libérant l'humidité et conférant une résistance mécanique au matériau d'emballage, constituée d'un papier (10) présentant de manière optionnelle un revêtement (11) est liée de manière inséparable à une deuxième couche fonctionnelle adjacente à la première couche fonctionnelle et présentant une perméabilité aux gaz changeant en fonction de l'humidité, constituée d'un polyamide (13), d'un polyamide (13) et d'une résine ionomère (12) ou d'un polyamide (13) et d'un copolymère d'éthylène-alcool de vinyle (12).

2. Matériau d'emballage suivant la revendication 1, **caractérisé en ce que** le papier (10) présente un revêtement (11) et constitue un composite papier-matière plastique, qui porte sur au moins une face un revêtement d'extrusion, de dispersion, de paraffine, un revêtement fusible à chaud ou une couche de vernis.

3. Matériau d'emballage suivant la revendication 2, **caractérisé en ce que** la matière plastique dans le matériau composite papier-matière plastique contient une polyoléfine, de préférence un polyéthylène ou un polypropylène, un copolymère d'éthylène, un polyamide, un polyester, un chlorure de polyvinyle, un acétate de polyvinyle, un polyacrylate, une paraffine, des mélanges de paraffine et de matière plastique, de préférence de paraffine et de copolymères d'éthylène et d'acétate de vinyle, des dérivés de la colophane, des résines d'hydrocarbures, des cires ou des vernis de scellement, de préférence des vernis de scellement à base de chlorure de polyvinyle, de polyoléfines ou d'esters polyacryliques.

4. Matériau d'emballage suivant la revendication 1, **caractérisé en ce que** le polyamide (13) et la résine ionomère (12) ou le polyamide (13) et le copolymère d'éthylène-alcool de vinyle (12) sont coextrudés.

5. Matériau d'emballage suivant la revendication 1, **caractérisé en ce que** le matériau d'emballage présente une impression et/ou une impression inverse sur la première couche fonctionnelle (10, 11) et en particulier une impression ou une impression inverse sur le côté de la première couche fonctionnelle faisant face à la deuxième couche fonctionnelle (12, 13) et/ou une impression (15) et/ou une impression inverse (14) sur la deuxième couche fonctionnelle (12, 13).

6. Matériau d'emballage suivant la revendication 1, **caractérisé en ce que** le matériau d'emballage présente successivement en partant d'un côté prévu comme face intérieure d'un emballage:
a. comme première couche fonctionnelle (10, 11)
- un revêtement d'extrusion, un revêtement de dispersion, un revêtement de paraffine, un revêtement fusible à chaud ou une couche de vernis (11)
- un papier (10)
b. comme deuxième couche fonctionnelle (12, 13)
- une résine ionomère (12) ou un copolymère d'éthylène-alcool de vinyle (12)
- un polyamide (13).

7. Utilisation du matériau d'emballage suivant la revendication 1 pour envelopper un fromage à pâte molle pour la maturation.
